# EUROPÄISCHE PATENTSCHRIFT

(11) **EP 3 098 152 B1**
(45) Veröffentlichungstag und Bekanntmachung des Hinweises auf die Patenterteilung: **18.04.2018**
(21) Anmeldenummer: 16171385.4
(22) Anmeldetag: 25.05.2016
(51) Int. Cl.: B62K 25/02, B62B 7/12, B62K 27/00, B62B 7/04

(54) **RADGABEL**
WHEEL FORK
FOURCHE

(30) Priorität: 28.05.2015 DE 102015108441
(43) Veröffentlichungstag der Anmeldung: 30.11.2016
(73) Patentinhaber: Croozer GmbH, 50825 Köln (DE)
(72) Erfinder: Gehlen, Andreas, 50829 Köln (DE); Weber, Herbert, 83254 Breitbrunn (DE)
(74) Vertreter: Lenzing Gerber Stute

(56) Entgegenhaltungen:
- DE-C- 685 830
- FR-A- 978 365
- US-A- 5 215 324
- US-A- 6 089 675
- US-B1- 6 276 759
- US-B1- 7 090 231

## Beschreibung

Die vorliegende Erfindung betrifft eine Radgabel, insbesondere für einen Multifunktions-Fahrradanhänger, mit mindestens einem Gabelarm, an dessen freiem Ende ein Gabelausfall zur Aufnahme einer Radachse eines Rades ausgebildet ist, wobei der Gabelausfall einen beweglichen Riegel aufweist, der mindestens zwei Positionen einnehmen kann, wobei in der ersten Position des Riegels das Einsetzen der Radachse in den Gabelausfall möglich ist, und dass Mittel zum Halten des Riegels zumindest in seiner zweiten Position vorgesehen sind, wobei der Riegel in der zweiten Position die Öffnung des Gabelausfalls zumindest soweit versperrt, dass eine in den Gabelausfall eingesetzte Radachse sicher darin gehalten ist. Die Erfindung betrifft auch ein System bestehend aus einer Radgabel und einer Radachse.

Multifunktions-Fahrradanhängern, insbesondere solche zum Transport von Kindern, erfreuen sich aufgrund ihrer vielseitigen Einsatzmöglichkeiten immer größerer Beliebtheit. Sie können zum Beispiel zu einem sogenannten Jogger oder Walker umgebaut werden, indem ihre Deichsel entfernt oder eingeklappt und eine aus zwei voneinander getrennten Armen bestehende, nach vorn auskragende Vorderradgabel am Fahrzeugchassis des Fahrradanhängers montiert wird.

Im Gegensatz zu einem Radwechsel an Fahrrädern kommt der Vorderradwechsel bei Multifunktions-Fahrradanhängern vergleichsweise häufig vor. Deshalb werden die Radachsen der Vorderräder in aller Regel mit Schnellspannern befestigt. Dabei muss der Benutzer unbedingt darauf achten, dass die Schnellspanner auf beiden Seiten der Achse fest angezogen sind, um ein Herausrutschen der Achse aus dem Gabelausfall und dadurch bedingte Unfälle sicher zu vermeiden. Ob der Schnellspanner auf beiden Seiten der Achse ausreichend fest angezogen ist, lässt sich optisch nicht ohne weiteres erkennen. Eine geschlossene Position des Schnellspannhebels lässt noch nicht eindeutig den Rückschluss zu, dass die Radachse tatsächlich vom Schnellspanner ausreichend fest im Gabelausfall gehalten wird. So hängt es bei geschlossenem Schnellspannhebel davon ab, wie weit die Mutter des Schnellspanners auf das Achsenende aufgeschraubt ist, und ob der Exzenter des Schnellspanners in seiner Schließposition eine ausreichende Klemmwirkung ausübt.

Aus der US 6 276 759 B1 ist ein Kinderwagen der eingangs genannten Art mit einer Radgabel zur Aufnahme einer Vorderradachse bekannt. Die aus US 6 276 759 B1 bekannte Radgabel, auf der der Oberbegriff von Anspruch 1 basiert, weist Gabelarme mit Gabelausfällen zur Aufnahme einer Radachse auf. Die Radachse wird durch federelastische Riegelbleche im Gabelausfall gehalten. Zum Einsetzen und Herausnehmen der Achse können die Riegelbleche händisch gegen die Federkraft zur Seite gedrückt werden, sodass die Radachse frei ist und herausgenommen werden kann. Die Bedienung des Riegelblechs ist umständlich, da es während des Einsetzens und des Herausnehmens der Radachse gegen die Federkraft gehalten werden muss. Eine Aufgabe der vorliegenden Erfindung besteht darin, eine alternative Möglichkeit bereitzustellen, mit der ein Rad an einer Radgabel befestigt werden kann.

Diese Aufgabe wird erfindungsgemäß mit einer Radgabel mit den Merkmalen des Anspruchs 1 gelöst.

Die erste und zweite Position des Riegels können beispielsweise durch hierfür vorgesehene Anschläge, die die Beweglichkeit des Riegels begrenzen, definiert sein. Dies ist aber nicht zwingend notwendig. So kann die zweite Position auch durch die Radachse, an der der Riegel in seiner zweiten Position anliegt, definiert sein, und in einer einfachsten Ausführungsform muss die erste Position nicht lagegenau definiert sein, vielmehr kann sie beliebig sein.

Die Erfindung ermöglicht eine gute Sicherung der Radachse im Gabelausfall. Ist der Riegel sichtbar ausgeführt, reicht eine optische Kontrolle um festzustellen, ob die Radachse ordnungsgemäß in den Gabelausfall eingesetzt wurde und darin sicher gehalten ist.

Die Haltemittel weisen erfindungsgemäß eine Totpunktfeder auf, über deren Totpunkt der Riegel aus seiner ersten in die zweite Position und von der zweiten in die erste Position bewegt werden kann. Dabei ist die Feder vorzugsweise so ausgelegt, dass die auf den Riegel wirkende Federkraft zumindest in der zweiten Position so groß ist, dass sich die Radachse nicht ungewollt aus dem Gabelausfall heraus lösen kann.

Ein Bewegen des Riegels aus der ersten in die zweite Position und zurück kann beispielsweise durch manuelle Betätigung des Riegels selbst erfolgen. Es kann hierfür beispielsweise auch ein manuell betätigbarer Hebel vorgesehen sein, der mit dem Riegel gekoppelt ist.

In einer bevorzugten Ausgestaltung der Erfindung ist als Hebel zum Betätigen des Riegels ein Mitnehmer vorgesehen, der dazu ausgelegt ist, von der Radachse beim Einsetzen in den Gabelausfall betätigt zu werden, und der mit dem Riegel derart gekoppelt ist, dass der Riegel beim Einsetzen der Radachse in den Gabelausfall den Totpunkt der Totpunkfeder überwindet und der Riegel nach Überwinden des Totpunkts automatisch in die zweite Position bewegt wird und so die Radachse im Gabelausfall hält.

Eine kompakte Ausgestaltung der Erfindung ist insbesondere dann möglich, wenn der Riegel drehbar gelagert ist. Beispielsweise kann die Totpunktfeder direkt an dem Riegel angreifen, weitere Mittel zum Koppeln der Totpunktfeder mit dem Riegel sind dann nicht notwendig.

Vorzugsweise ist der Drehpunkt des Riegels derart gewählt, dass ein Moment, das von Kräften bewirkt wird, die von der in den Gabelausfall eingesetzte Radachse auf den Riegel wirken, nicht in Richtung des Totpunkts der Totpunktfeder gerichtet ist. Damit sind die Anforderungen an die Höhe der Federkraft der Totpunktfeder vergleichsweise gering, und bei geringerer Federkraft vereinfacht sich die Handhabung. Der Drehpunkt ist hierfür vorzugsweise im Bereich des geschlossenen Endes des Gabelausfalls angeordnet, also auf der Seite der Radachse, die der Seite gegenüberliegt, an der das Riegelstück auf die Radachse wirkt, wenn es die Radachse gegen ein Herausbewegen aus dem Gabelausfall sichert. Bei einer solchen Ausführung, bei der die von der Radachse wirkenden Kräfte in Richtung des einzigen Freiheitsgrades, nämlich aus dem Gabelausfall hinaus, gerichtet sind, entsteht am Drehpunkt kein oder zumindest kein wesentliches Drehmoment. Der Drehpunkt kann aber auch so gewählt sein, dass durch Kräfte, die von der Radachse auf den Riegel wirken, Momente erzeugt werden, deren Wirkung vom Totpunkt der Totpunkfeder weg gerichtet ist.

Wenn der Riegel drehbar gelagert ist, ist es auch möglich, den Mitnehmer und den Riegel einstückig miteinander zu verbinden und beispielsweise als Maulstück auszubilden. So kann durch die drehbare Lagerung der Mitnehmer beim Einsetzen der Radachse in den Gabelausfall aus dem Weg der Radachse herausgeschwenkt und der Riegel in seine zweite Position hineingeschwenkt werden. Eine solche Konstruktion ist äußerst einfach und effektiv.

Alternativ ist es auch möglich, den Riegel axial derart verschiebbar auszubilden, dass der Gabelausfall verriegelt ist, wenn die Radachse in den Gabelausfall eingesetzt ist, so dass die Radachse sicher im Gabelausfall gehalten ist. Ein axial wirkender Schiebemechanismus ist konstruktiv eine ebenso einfache Lösung und kann beispielsweise mit einem einfachen, verschiebbaren Stift verwirklicht werden, der beispielsweise über einen Rastmechanismus in zumindest der verriegelnden Position feststellbar sein kann. Soll der axial verschiebbare Riegel mit einer Totpunktfeder betätigt werden, ist allerdings eine mechanische Übersetzung der Bewegung eines drehbaren Hebels, an den die Totpunktfeder dann anzugreifen hat, in eine axiale und damit lineare Bewegung notwendig.

Bei noch einer besonderen Ausgestaltung der Erfindung ist ein Betätigungselement, insbesondere ein Druckknopf, vorgesehen, mit dem der Riegel entgegen der Kraft der Totpunktfeder aus der zweiten in die erste Position gebracht werden kann. Gerade in Verbindung mit der Ausgestaltung der Erfindung mit einem Mitnehmer ergibt sich eine besonders einfache Handhabbarkeit für einen Benutzer. So muss er jeden Gabelausfall der Gabel lediglich auf die Enden der Radachse so weit aufdrücken, dass der Mitnehmer den Totpunkt der Totpunktfeder überwindet, so dass der Riegel automatisch einschnappt und den Gabelausfall verriegelt, die Radachse also darin gesichert ist. Zum Lösen muss an jedem Gabelausfall lediglich ein Druckknopf so weit betätigt werden, bis der Totpunkt der Totpunktfeder überwunden ist. Der Riegel springt dann automatisch in eine erste Ausgangsposition zurück. Gleichzeitig unterstützt der Mitnehmer die Bewegung der Radachse aus dem Gabelausfall heraus.

Ein solcher Druckknopf kann außerdem zur optischen Überprüfung genutzt werden, ob der Riegel sicher geschlossen ist oder nicht. Ist der Druckknopf nämlich mit der Totpunktfeder oder dem Riegel gekoppelt, steht der Druckknopf in der zweiten Position weiter aus einem Gehäuse des Gabelausfalls hervor als in der ersten Position des Riegels. Dies kann beispielsweise dadurch sichtbar gemacht werden, dass der in der zweiten Position weiter herausstehende Bereich des Druckknopfes farblich markiert wird.

Grundsätzlich ist die Radgabel in Ausführung als einarmige Gabel, beispielsweise als sogenannter Lefty, denkbar. In diesem Fall müssen Gabelausfall und Riegel so ausgestaltet sein, dass sie die auftretenden Hebelkräfte problemlos aufnehmen können.

Einen besonderen Vorteil bietet die Erfindung insbesondere bei Radgabeln mit zwei Gabelarmen, die jeweils einen Gabelausfall im Sinne der Erfindung aufweisen. Insbesondere ist die Erfindung für Fahrzeuge, bei denen die Räder häufig gewechselt werden, wie beispielsweise für Multifunktions-Fahrradanhänger, von Vorteil, bei denen die Gabel aus zwei einzelnen Gabelarmen besteht, deren dem jeweiligen Gabelausfall abgewandte Enden ausgebildet sind, um in eine hierfür vorgesehene Führung des Fahrzeugs eingesetzt zu werden.

Eine weitere deutliche Verbesserung lässt sich bei einer Radgabel der eingangs genannten Art dadurch erreichen, wenn der Gabelausfall am oder im Rohrendstück des Gabelarms axial verschieblich gelagert und feststellbar ist.

So kann bei den nach vorn auskragenden Gabelarmen von bekannten Multifunktions-Fahrradanhängern in ihrer Funktion als sogenannter Jogger oder Walker das Problem bestehen, dass die Spur des Vorderrads nicht exakt parallel zur Längsachse des Fahrradanhängers, sondern leicht schräg dazu verläuft. Dadurch ist der Geradeauslauf des Fahrradanhängers schlecht, und im schlimmsten Fall muss der den Fahrradanhänger schiebende Benutzer die Fahrtrichtung regelmäßig korrigieren. Ist mindestens ein Gabelausfall axial in Richtung des Gabelarms verschieblich, kann die Spur des Vorderrades exakt eingestellt und somit das Problem auf einfache Weise behoben werden.

In einer bevorzugten Ausführungsform dieser Erfindung ist der Gabelausfall in oder auf einem Rohrendstück des Gabelarms axial verschieblich gelagert, wobei mindestens ein Stift vorgesehen ist, der bzw. die sich von außen durch eine Außenwandung des Rohrendstücks hindurch zumindest teilweise in eine hierfür vorgesehene Ausnehmung im Gabelausfall hinein erstreckt bzw. erstrecken, und wobei eine Führung für den mindestens einen Stift vorgesehen ist, die eine Bewegung des mindestens einen Stifts mit einer Richtungskomponente ermöglicht, die axial zum Rohrendstück verläuft. Über den Stift ist dann die Position des Gabelausfalls im Rohrendstück einstellbar.

Diese erfindungsgemäße Ausführungsform ist insbesondere dann für den Benutzer besonders komfortabel, wenn die Führung einen wendelförmigen Abschnitt in der Wandung des Rohres beschreibt und das äußere Ende des Stiftes in einem Mantelstück gehalten ist, das das Rohrendstück zumindest teilweise umgreift und um das Rohrendstück herum beweglich gelagert ist. Ebenso ist es möglich, eine Führung mit einer axialen Steigung in der Gehäusewandung des Gabelausfalls vorzusehen. Je kleiner die Steigung des wendelförmigen Abschnitts in axialer Richtung ist, desto einfacher lässt sich die Spur des Rades exakt einstellen. Vorzugsweise ist das Mantelstück dabei in einem die Gehäusewandung des Gabelausfalls eingelassenen Lagerbett geführt und damit in Bezug zur Gehäusewandung des Gabelausfalls ortsfest. Ein System bestehend aus der erfindungsgemäßen Radgabel und einer mit der erfindungsgemäßen Radgabel zusammenwirkenden Radachse ist erfindungsgemäß dadurch gekennzeichnet, dass an mindestens einem der Enden der Radachse eine umlaufende Nut vorgesehen ist, in die der Gabelausfall und/oder der Riegel eingreifen können, so dass eine in den Gabelausfall eingesetzte Radachse gegen ein axiales Verschieben in Richtung der Radachse gesichert ist. Diese Nut kann im Bereich eines oder beider Enden einer einstückigen Radachse vorgesehen sein, wird aber vorzugsweise in einem Aufsatzstück ausgebildet, das auf ein Achsenende aufgesetzt (beispielsweise aufgeschraubt) wird.

Natürlich ist eine derartige Radachse nicht zwingend notwendig. Sind die Gabelarme steif genug, reichen die zwischen den Gabelausfällen sitzende Radnabe bzw. einfache auf der Radachse sitzende Schraubmuttern aus, um einen spielfreien Sitz der Radachse zwischen den Gabelausfällen zu ermöglichen.

Im Folgenden wird die Erfindung anhand von Figuren, in denen bevorzugte Ausführungsbeispiele der Erfindung dargestellt sind, näher erläutert.

Es zeigen
Fig. 1 eine perspektivische Ansicht einer erfindungsgemäßen Radgabel als Vorderradgabel für einen Multifunktions-Fahrradanhänger mit Joggerfunktion zusammen mit einem darin eingesetzten Vorderrad;
Fig. 2 eine perspektivische Ansicht eines Achshalters als Gabelausfall der erfindungsgemäßen Radgabel;
Fig. 3 den in Fig. 2 dargestellten Achshalter ohne seitliche Gehäusewandung;
Fig. 4 die Totpunktfeder-Konstruktion des in Fig. 2 dargestellten Achshalters;
Fig. 5 den in Fig. 2 dargestellten Achshalter mit angebundenem Gabelrohr in anderer perspektivischer Darstellung;
Fig. 6 den in Figur 5 dargestellten Achshalter in Seitenansicht ohne das in Figur 5 dargestellte Mantelstück;
Fig. 7 den in Figur 6 dargestellten Achshalter in Seitenansicht ohne das in Fig. 5 dargestellte Mantelstück ohne die in der Ansicht vordere Gehäusehälfte;
Fig. 8 die Darstellung der Fig. 7 ohne Rohrendstück;
Fig. 9 eine perspektivische Ansicht einer Radachse des in Fig. 1 dargestellten Vorderrades;
Fig. 10 die in Fig. 8 dargestellte Radachse mit abgenommener Endkappe; und
Fig. 11 eine Endkappe der in Fig. 8 dargestellten Radachse in perspektivischer Ansicht.

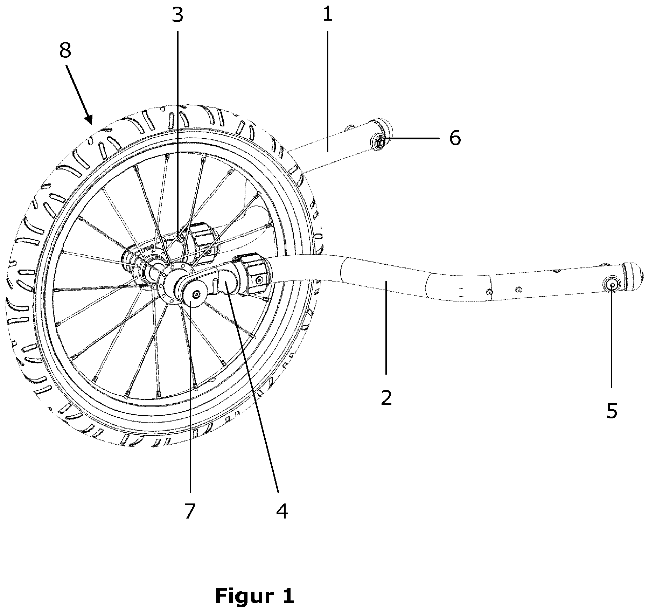

In Figur 1 ist eine erfindungsgemäße Radgabel für die Joggerfunktion eines Multifunktions-Fahrradanhängers dargestellt. Sie weist einen rechten Gabelarm 1 und einen linken Gabelarm 2 auf. An den vorderen Enden der Gabelarme 1, 2 sind Achshalter 3, 4 vorgesehen, die jeweils die Funktion eines Gabelausfalls haben. An den hinteren Enden weisen die Gabelarme seitliche Stifte 5, 6 auf, die der Befestigung der Gabelarme 1, 2 in hierfür vorgesehene Führungen an einem Chassis eines hier nicht dargestellten Fahrradanhängers dienen. Die Achshalter halten die Radachse 7 eines Rades 8 des Fahrradanhängers mit Joggerfunktion.

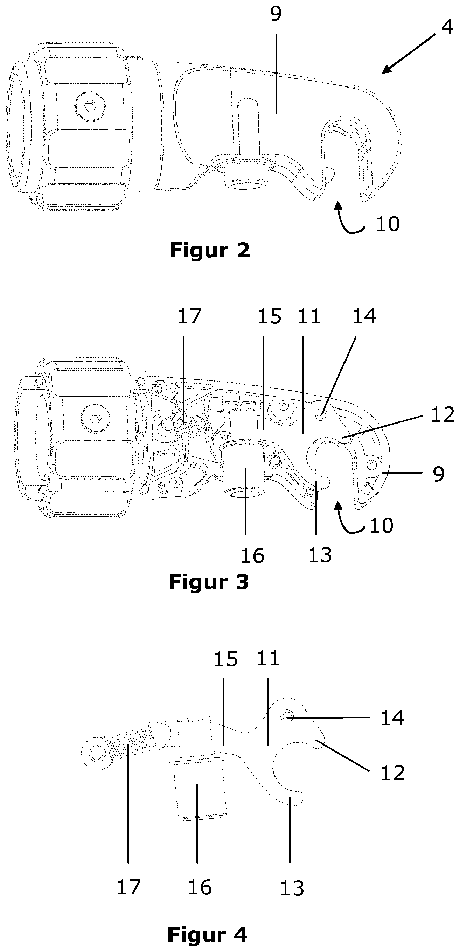

In den Figuren 2 bis 4 sind Details eines Achshalters 4 der in Figur 1 dargestellten erfindungsgemäßen Radgabel zu sehen. Der Achshalter 4 weist ein Gehäuse 9 mit einer nach unten offenen Achsaufnahme 10 auf, so dass die Achsaufnahme 10 von oben quer auf das Ende einer Radachse aufgeschoben werden kann, bis der Boden der Achsaufnahme 10 auf der Radachse aufliegt. Zum Halten der Radachse in der Achsaufnahme 10 ist ein drehbar gelagertes Verriegelungselement 11 vorgesehen. Das Verriegelungselement 11 weist auf einer Seite einen Mitnehmer 12 und einen Riegel 13 auf, die gemeinsam maulartig ausgebildet sind, wobei der Mitnehmer 12 in einer ersten Position im Bereich des Bodens der Achsaufnahme 10 in den lichten Bereich der Achsaufnahme 10 und der Riegel 13 seitlich allenfalls ein wenig in den lichten Bereich der Achsaufnahme 10 hineinragen. Der Drehpunkt 14 des Verriegelungselements 11 ist oberhalb des Bodens der Achsaufnahme 10 und in der Darstellung links von dem in die Achsaufnahme hineinragenden Teil des Mitnehmers 12 angeordnet. Das Verriegelungselement 11 weist außerdem einen Hebel 15 auf, der sich im Wesentlichen parallel zur Längsachse des Achshalters 4 in Richtung zum Gabelrohr (hier nicht dargestellt) hin erstreckt. Der Hebel 15 ist mit einem in den Figuren darunter angeordneten Druckknopf 16 gekoppelt. Am freien Ende des Hebels 15 ist eine Totpunktfeder 17 angeordnet, die in der ersten Position des Verriegelungselements 11 zusammen mit dem Hebel 15 einen stumpfen Winkel bildet.

Wird die Achsaufnahme 10 auf eine Radachse aufgeschoben, wird der Mitnehmer 12 nach oben gedrückt. Dadurch wird der Hebel 15 in der Darstellung entgegen dem Uhrzeigersinn nach unten verschwenkt, bis der Totpunkt der Totpunktfeder 17 überschritten ist. Dabei wird die Totpunktfeder 17 zunächst komprimiert, bis der Totpunkt erreicht ist. Ist der Totpunkt überschritten, entspannt die Totpunktfeder 17, wobei das Verriegelungselement 11 weiterhin entgegen dem Uhrzeigersinn gedreht wird. Gleichzeitig wird der Druckknopf 16 nach unten verlagert. Durch die Bewegung des Verriegelungselements 11 entgegen dem Uhrzeigersinn schwenkt der Riegel 13 kontinuierlich in den lichten Raum der Achsaufnahme 10 hinein, bis er an der Radachse anliegt. Die Radachse ist dann gegen ein Herausrutschen aus der Achsaufnahme 10 gesichert. Drückt die Radachse nach unten auf den Riegel, wird hierdurch kein im Uhrzeigersinn auf das Verriegelungselement 11 wirkendes Drehmoment erzeugt.

Um die Radachse aus der Achsaufnahme 10 zu entfernen, wird der Druckknopf 16 eingedrückt. Hierdurch wird der Hebel 15 nach oben gedrückt, wobei das Verriegelungselement 11 im Uhrzeigersinn verschwenkt wird, bis der Totpunkt der Totpunktfeder 17 überschritten ist. Ist der Totpunkt überschritten, kann sich die Totpunktfeder 17 wieder entspannen, wobei das Verriegelungselement 11 weiterhin im Uhrzeigersinn gedreht wird, bis der Riegel 13 an der unteren Innenwand des Gehäuses 9 anliegt und die Radachse freigibt.

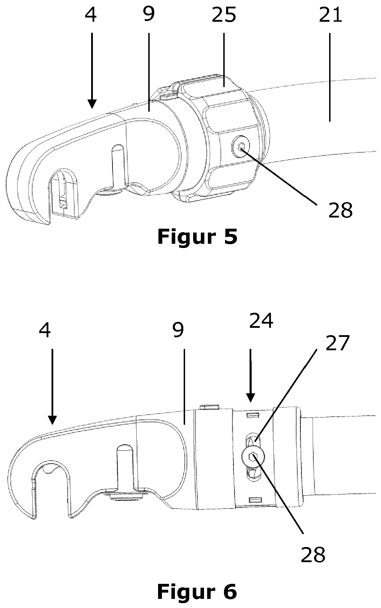

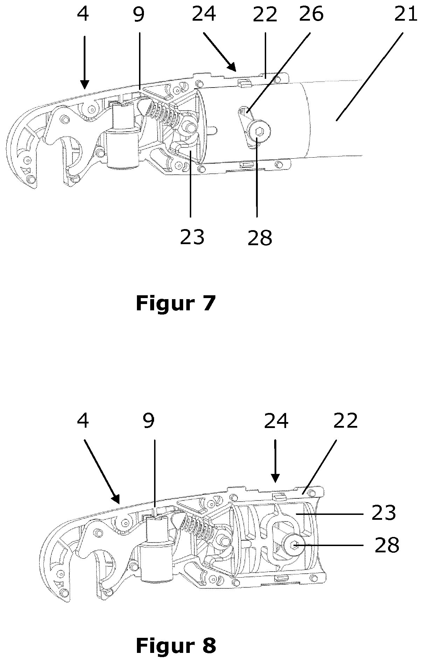

Anhand der Figuren 5 bis 8 wird die Verbindung zwischen dem Rohrendstück 21 des Gabelrohrs 2 und dem Achshalter 4 der in Figur 1 dargestellten Radgabel näher erläutert. Das Rohrendstück 21 sitzt in einem offenen Ende 22 des Gehäuses 9 des Achshalters 4, wobei die Gehäusewand das Rohrendstück 21 vollständig umschließt. Innerhalb des Rohrendstücks 21 sitzt ein Kunststoffkörper 23 zur Stabilisierung des Rohrendstücks 21 gegen die vom Achshalter 4 in das Rohrendstück 21 eingeleiteten Kräfte. In die Außenseite der Gehäusewand ist ein umlaufendes Lagerbett 24 für ein umlaufendes Mantelstück 25 eingelassen, das innerhalb des Lagerbettes 24 frei um das Gehäuse herum drehbar ist. Im Rohrendstück 21 sind auf gegenüberliegenden Seiten miteinander korrespondierende, wendelartige Führungen 26 mit einer konstanten Steigung in axialer Richtung eingelassen. Außerdem sind im Lagerbett 24 der Gehäusewand auf gegenüberliegenden Abschnitten Führungsdurchbrüche 27 vorgesehen, die allerdings in axialer Richtung keine Steigung aufweisen. Ein Stift 28 ist vorgesehen, dessen Breite der Breite der Führungen 26 und der Führungsdurchbrüche 27 entspricht. Der Stift 28 erstreckt sich durch die Führungsdurchbrüche 27, die Führungen 26 und den Kunststoffkörper 23 hindurch. Seine Enden sind im Mantelstück 25 verschraubt. Wird das Mantelstück 25 um die Gehäusewandung herum im Lagerbett 24 gedreht, läuft der Stift 28 sowohl entlang der Führungen 26 im Rohrendstück 21 mit axialer Steigung als auch entlang der Führungsdurchbrüche 27 der Gehäusewandung ohne axiale Steigung. Dadurch wird die Gehäusewandung axial relativ zum Rohrendstück verschoben. Im Ergebnis ist es möglich, die Lage des Achshalters 4 in axialer Richtung zu verändern und so die Spur des von der Radgabel gehaltenen Rades 8 zu verstellen. Gleiches kann erreicht werden, wenn die Führungsdurchbrüche im Lagerbett der Gehäusewandung eine axiale Steigung aufweisen und die Führungen im Rohrendstück keine. Auch andere Ausführungsformen mit einzelnen, fest an der Gehäusewandung oder dem Rohrendstück angeordneten Stiften und hierfür vorgesehenen Führungen mit axialer Komponente in dem jeweils anderen Bauteil sind möglich.

Das Mantelstück 25 weist auf seiner Innenseite einen Abschnitt mit einer elastischen Rippenstruktur auf, die mit einer entsprechenden Rippenstruktur auf der Außenseite der Gehäusewand zusammenwirkt und einem ungewollten Verdrehen des Mantelstücks 25 entgegenwirkt.

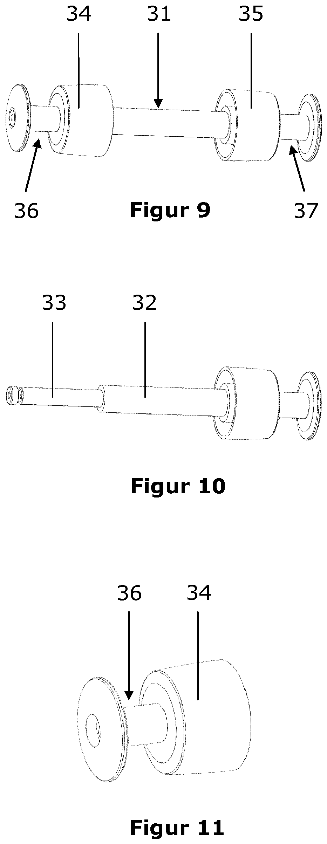

In den Figuren 9 bis 11 ist eine Radachse dargestellt, die zur Verwendung mit der erfindungsgemäßen Radgabel gedacht ist.

Die Radachse weist eine Achse 31 mit einem zentralen dickeren Abschnitt 32 und endseitig jeweils einem dünneren Abschnitt 33 auf. Der zentrale dickere Abschnitt dient als Sitz für die Lagerung (insbesondere Wälzlager) der Radnabe. Auf den endseitigen, dünneren Abschnitten 32 sind Endkappen 34, 35 aufgesetzt. Der Außendurchmesser der Endkappen ist vorzugsweise so bemessen, dass er dem Außendurchmesser von auf dem zentralen Abschnitt 33 angeordneten Wälzlagern entspricht, so dass die Endkappen die Wälzlager abdecken. An den äußeren Enden der Endkappen 34, 35 sind Nuten 36, 37 eingelassen. Die Breite der Nuten entspricht der Breite der Gehäusebreite der Achshalter 4. Die Nuten 36, 37 dienen dazu, ein Verschieben der darin eingesetzten Achshalter 4 längs der Radachse zu verhindern. Die Endkappen 34, 35 sind stirnseitig mit der Achse 31 verschraubt.

## Patentansprüche

1. Radgabel, insbesondere für eine loggerfunktion eines Multifunktions-Fahrradanhängers, mit mindestens einem Gabelarm (1, 2), an dessen freiem Ende ein Gabelausfall (3, 4) zur Aufnahme einer Radachse eines Rades (8) ausgebildet ist, wobei der Gabelausfall (3, 4) einen beweglichen Riegel (13) aufweist, der mindestens zwei Positionen einnehmen kann, wobei in der ersten Position des Riegels (13) das Einsetzen der Radachse in den Gabelausfall (3, 4) möglich ist, und dass Mittel zum Halten des Riegels (13) zumindest in seiner zweiten Position vorgesehen sind, wobei der Riegel (13) in der zweiten Position die Öffnung des Gabelausfalls (3, 4) zumindest soweit versperrt, dass eine in den Gabelausfall (3, 4) eingesetzte Radachse sicher darin gehalten ist, **dadurch gekennzeichnet, dass** die Haltemittel eine Totpunktfeder (17) aufweisen, über deren Totpunkt der Riegel (13) aus seiner ersten in die zweite Position und von der zweiten in die erste Position bewegt werden kann.

2. Radgabel nach Anspruch 1, **gekennzeichnet durch** einen Mitnehmer (12), der dazu ausgelegt ist, von der Radachse beim Einsetzen in den Gabelausfall (3, 4) betätigt zu werden, und der mit dem Riegel (13) derart gekoppelt ist, dass der Riegel (13) beim Einsetzen der Radachse in den Gabelausfall (3, 4) den Totpunkt der Totpunkfeder (17) überwindet und der Riegel (13) nach Überwinden des Totpunkts automatisch in die zweite Position bewegt wird.

3. Radgabel nach einem der Ansprüche 1 oder 2, **dadurch gekennzeichnet, dass** der Riegel (13) drehbar gelagert ist.

4. Radgabel nach Anspruch 2 und 3, **dadurch gekennzeichnet, dass** der Riegel (13) und der Mitnehmer (12) einstückig miteinander verbunden und insbesondere als Maulstück ausgebildet sind.

5. Radgabel nach Anspruch 2 und 4 oder 5, **dadurch gekennzeichnet, dass** der Drehpunkt (14) des Riegels (13) derart gewählt ist, dass ein Moment, das von Kräften bewirkt wird, die von der in den Gabelausfall (3, 4) eingesetzten Radachse auf den Riegel (13) wirken, nicht in Richtung des Totpunkts der Totpunktfeder (17) gerichtet ist.

6. Radgabel nach Anspruch 1 oder 2, **dadurch gekennzeichnet, dass** der Riegel (13) axial verschiebbar ist.

7. Radgabel nach einem der Ansprüche 1 bis 6, **gekennzeichnet durch** ein Betätigungselement, insbesondere einen Druckknopf (16), mit dem der Riegel (13) aus der zweiten in die erste Position gebracht werden kann.

8. Radgabel nach einem der vorstehenden Ansprüche, **gekennzeichnet durch** zwei Gabelarme (1, 2) mit jeweils einem Gabelausfall (3, 4), wobei jeder Gabelausfall (3, 4) einen beweglichen Riegel (13) zum Halten der Radachse im Gabelausfall (3, 4) aufweist.

9. Radgabel nach einem der vorstehenden Ansprüche, **dadurch gekennzeichnet, dass** jeder Gabelarm (1, 2) ausgebildet ist, um in eine hierfür vorgesehene Führung eines Fahrradanhängers eingesetzt zu werden.

10. Radgabel nach einem der Ansprüche 1 bis 9, **dadurch gekennzeichnet, dass** der Gabelausfall (3, 4) am oder im Rohrendstück (21) des Gabelarms (1, 2) axial verschieblich gelagert und feststellbar ist.

11. Radgabel nach Anspruch 10, **dadurch gekennzeichnet, dass** der Gabelausfall (3, 4) in oder auf einem Rohrendstück (21) des Gabelarms (1, 2) axial verschieblich gelagert ist, und dass mindestens ein Stift (28) vorgesehen ist, der bzw. die sich von außen durch eine Außenwandung des Rohrendstücks (21) sowie durch eine Gehäusewandung des Gabelausfalls (3, 4) hindurch erstreckt bzw. erstrecken, wobei eine Führung (26) für den mindestens einen Stift vorgesehen ist, die eine Bewegung des mindestens einen Stifts mit einer Richtungskomponente ermöglicht, die axial zum Rohrendstück (21) verläuft.

12. Radgabel nach Anspruch 11, **dadurch gekennzeichnet, dass** die Führung (26) einen wendelförmigen Abschnitt in der Wandung des Rohrendstücks (21) beschreibt, und dass das äußere Ende des Stiftes (28) in einem das Rohrendstück (21) zumindest teilweise umgreifenden Mantelstück (25) gehalten ist, das um das Rohrendstück (21) herum beweglich gelagert ist.

13. Radgabel nach Anspruch 11, **dadurch gekennzeichnet, dass** mindestens eine Führung mit einer axialen Steigung in mindestens einer Gehäusewandung des Gabelausfalls vorgesehen ist, und dass das äußere Ende des Stiftes (28) in einem das Rohrendstück (21) zumindest teilweise umgreifenden Mantelstück (25) gehalten ist, das um das Rohrendstück (21) herum beweglich gelagert ist.

14. Radgabel nach Anspruch 13, **dadurch gekennzeichnet, dass** das Mantelstück (25) in einem die Gehäusewandung des Gabelausfalls (3, 4) eingelassenen Lagerbett geführt ist.

15. System bestehend aus einer Radgabel gemäß einem der Ansprüche 1 bis 14 und einer Radachse, wobei an mindestens einem der Enden der Radachse eine umlaufende Nut (36, 37) vorgesehen ist, in die der Gabelausfall (3, 4) und/oder der Riegel (13) der Radgabel eingreifen können, so dass eine in den Gabelausfall (3, 4) eingesetzte Radachse gegen ein axiales Verschieben in Richtung der Radachse gesichert ist.

## Claims

1. Wheel fork, in particular for a jogger function of a multifunctional bicycle trailer, comprising at least one fork arm (1, 2), having a dropout (3, 4) on its free end configured to receive a wheel axle of a wheel, wherein the dropout (3, 4) includes a movable latch (13) configured to assume at least two positions, wherein in a first position of the latch (13) the wheel axle can be fitted into the dropout (3, 4), and retaining means are provided to hold the latch (13) at least in its second position, wherein in the second position the latch (13) blocks the opening of the dropout (3, 4) at least so far that a wheel axle fitted in the dropout (3, 4) is held securely therein, **characterized in that** the retaining means comprise a dead-center spring (17) through whose dead-center the latch (13) can be moved from the first position into the second position and from the second position into the first position.

2. Wheel fork according to claim 1, **characterized by** a cam (12) designed to be actuated by the wheel axle as it is fitted into the dropout (3, 4), and is coupled with the latch (13) such that as the wheel axle is fitted into the dropout (3, 4), the latch (13) overcomes the dead-center of the dead-center spring (17) and after overcoming the dead-center the latch (13) is automatically moved into the second position.

3. Wheel fork according to one of the claims 1 or 2, **characterized in that** the latch (13) is rotatably mounted.

4. Wheel fork according to claim 2 or 3, **characterized in that** the latch (13) and the cam (12) are integrally connected to one another and in particular are designed as a jaw piece.

5. Wheel fork according to claim 2 and 4 or 5, **characterized in that** the pivot point (14) of the latch (13) is chosen such that a moment which is produced by forces which act from the wheel axle fitted in the dropout (3, 4) on the latch (13) is not directed in direction of the dead-center of the dead-center spring (17).

6. Wheel fork according to claim 1 or 2, **characterized in that** the latch (13) is axially displaceable.

7. Wheel fork according to one of claims 1 to 6, **characterized by** an actuating element, in particular a push button (16), by which the latch (13) can be moved from the second position into the first position.

8. Wheel fork according to one of the preceding claims, **characterized by** two fork arms (1, 2), each having a dropout (3, 4), wherein each dropout (3, 4) comprises a movable latch (13) configured to hold the wheel axle in the dropout (3, 4).

9. Wheel fork according to one of the preceding claims, **characterized in that** each fork arm (1, 2) is designed to be fitted into a guide of a bicycle trailer provided for this purpose.

10. Wheel fork according to one of claims 1 to 9, **characterized in that** the dropout (3, 4) is mounted on or in a tube end piece (21) of the fork arm (1, 2), such that it is enabled to be axially displaced and locked in position.

11. Wheel fork according to claim 10, **characterized in that** the dropout (3, 4) is mounted in or on a tube end piece (21) of the fork arm (1, 2), such that it is enabled to be axially displaced, and that it comprises at least one pin (28) extending from outside through an outer wall of the tube end piece (21) and through a housing wall of the dropout (3, 4), wherein a guide (26) for the at least one pin is provided which enables a movement of the at least one pin having a directional component which runs axially relative to the tube end piece (21).

12. Wheel fork according to claim 11, **characterized in that** the guide (26) describes a helical section in the wall of the tube end piece (21), and that the outer end of the pin (28) is held in a jacket piece (25), which at least partially encloses the tube end piece (21) and is mounted so as to be movable around the tube end piece (21).

13. Wheel fork according to claim 11, **characterized in that** at least one guide having an axial pitch is provided in at least one housing wall of the dropout, and that the outer end of the pin (28) is held in a jacket piece (25), which at least partially encloses the tube end piece (21) and is mounted so as to be movable around the tube end piece (21).

14. Wheel fork according to claim 13, **characterized in that** the jacket piece (25) is guided in a bearing bed recessed in the housing wall of the dropout (3, 4).

15. A system consisting of a wheel fork according to one of claims 1 to 14 and a wheel axle, wherein a peripheral groove (36, 37) is provided at at least one end of the axle, in which the dropout (3, 4) and/or the latch (13) of the wheel fork are enabled to engage, such that a wheel axle fitted in the dropout (3, 4) is secured against displacement in an axial direction of the wheel axle.

## Revendications

1. Fourche, en particulier pour une fonction jogger d'une remorque de vélo multifonction, équipée d'au moins un bras de fourche (1, 2), aux extrémités libres duquel est conçu un arrêt de fourche (3, 4) destiné à loger un axe de roue d'une roue (8) est conçu, où l'arrêt de fourche (3, 4) présente un verrou mobile (13) qui peut prendre au moins deux positions, où, dans la première position du verrou (13) il est possible d'insérer l'axe de roue dans l'arrêt de fourche (3, 4) et où l'on prévoit des moyens pour retenir le verrou (13) au moins dans sa deuxième position, où le verrou (13) bloque autant que possible, dans la deuxième position, l'ouverture de l'arrêt de fourche (3, 4) de sorte qu'un axe de roue inséré dans l'arrêt de fourche (3, 4) y soit retenu en toute sécurité, **caractérisée en ce que** les moyens de retenue présentent un ressort à point mort (17), dont au-delà du point mort le verrou (13) peut être déplacé de sa première position dans la deuxième position et de la deuxième position dans la première position.

2. Fourche selon la revendication 1, **caractérisée en ce qu'**un entraîneur (12) est conçu de sorte à pouvoir être actionné à partir de l'axe de roue lors de l'insertion dans l'arrêt de fourche (3, 4), et est couplé de telle sorte avec le verrou (13) que le verrou (13) franchit, lors de l'insertion de l'axe de roue dans l'arrêt de fourche (3, 4), le point mort du ressort à point mort (17) et le verrou (13) est déplacé automatiquement, après le franchissement du point mort, dans la deuxième position.

3. Fourche selon l'une des revendications 1 ou 2, **caractérisée en ce que** le verrou (13) est logé de façon à pouvoir tourner.

4. Fourche selon la revendication 2 et 3, **caractérisée en ce que** le verrou (13) et l'entraîneur (12) sont reliés l'un à l'autre en une seule pièce et sont conçus en particulier en tant que pièce à bouche.

5. Fourche selon la revendication 2 et 4 ou 5, **caractérisée en ce que** le point de pivot (14) du verrou (13) est sélectionné de telle sorte qu'un moment, induit par des forces qui agissement à partir de l'axe de roue inséré dans l'arrêt de fourche (3, 4) sur le verrou (13), n'est pas dirigé en direction du point mort du ressort à point mort (17).

6. Fourche selon la revendication 1 ou 2, **caractérisée en ce que** le verrou (13) peut être déplacé axialement.

7. Fourche selon l'une des revendications 1 à 6, **caractérisée par** un élément d'actionnement, en particulier un bouton-pression (16), avec lequel le verrou (13) peut être amené de la deuxième à la première position.

8. Fourche selon l'une des revendications précédentes, **caractérisée par** deux bras de fourche (1, 2) avec respectivement un arrêt de fourche (3, 4), où chaque arrêt de fourche (3, 4) présente un verrou mobile (13) destiné à retenir l'axe de roue dans l'arrêt de fourche (3, 4).

9. Fourche selon l'une des revendications précédentes, **caractérisée en ce que** chaque bras de fourche (1, 2) est conçu de sorte à pouvoir être utilisé dans un guidage d'une remorque de vélo prévu à cet effet.

10. Fourche selon l'une des revendications 1 à 9, **caractérisée en ce que** l'arrêt de fourche (3, 4) est susceptible d'être fixé ou logé de manière à pouvoir coulisser axialement sur ou dans une pièce terminale de tube (21) du bras de fourche (1, 2).

11. Fourche selon la revendication 10, **caractérisée en ce que** l'arrêt de fourche (3, 4) est logé de manière à pouvoir coulisser axialement dans ou sur une pièce terminale de tube (21) du bras de fourche (1, 2), et **en ce que** l'on prévoit au moins une tige (28) qui s'étend (ou s'étendent si plusieurs) respectivement à partir de l'extérieur à travers une paroi externe de la pièce terminale de tube (21) ainsi qu'à travers une paroi de logement de l'arrêt de fourche (3, 4), où l'on prévoit un guidage (26) pour au moins une tige qui permet un mouvement d'au moins une tige avec une composante directionnelle qui passe axialement par rapport à la pièce terminale de tube (21).

12. Fourche selon la revendication 11, **caractérisée en ce que** le guidage (26) décrit une section hélicoïdale dans la paroi de la pièce terminale de tube (21), et **en ce que** l'extrémité extérieure de la tige (28) est retenue dans une pièce de chemisage (25) enveloppant au moins partiellement la pièce terminale de tube (21), cette pièce de chemisage (25) étant logée mobile tout autour de la pièce terminale de tube (21).

13. Fourche selon la revendication 11, **caractérisée en ce que** l'on prévoit au moins un guidage avec une inclinaison axiale dans au moins une paroi de logement de l'arrêt de fourche, et **en ce que** l'extrémité extérieure de la tige (28) est retenue dans une pièce de chemisage (25) enveloppant au moins partiellement la pièce terminale de tube (21), cette pièce de chemisage (25) étant logée mobile tout autour de la pièce terminale de tube (21).

14. Fourche selon la revendication 13, **caractérisée en ce que** la pièce de chemisage (25) est guidée dans un support de palier encastré dans la paroi de logement de l'arrêt de fourche (3, 4).

15. Système se composant d'une fourche selon l'une des revendications 1 à 14 et d'un axe de roue, où l'on prévoit sur au moins une des extrémités de l'axe de roue une rainure périphérique (36, 37) dans laquelle peuvent s'encliqueter l'arrêt de fourche (3, 4) et/ou le verrou (13) du bras de roue, de sorte qu'un axe de roue inséré dans l'arrêt de fourche (3, 4) est protégé contre un déplacement axial en direction de l'axe de roue.
